(19) Europäisches Patentamt
European Patent Office
Office européen des brevets

(11) **EP 2 037 686 A2**

(12) **DEMANDE DE BREVET EUROPEEN**

(43) Date de publication:
**18.03.2009 Bulletin 2009/12**

(51) Int Cl.:
***H04N 7/26*** *(2006.01)*

(21) Numéro de dépôt: **08017099.6**

(22) Date de dépôt: **23.07.2004**

(84) Etats contractants désignés:
**AT BE BG CH CY CZ DE DK EE ES FI FR GB GR HU IE IT LI LU MC NL PL PT RO SE SI SK TR**

(62) Numéro(s) de document de la (des) demande(s) initiale(s) en application de l'article 76 CBE:
**04767775.2 / 1 779 664**

(71) Demandeur: **I-CES**
**75001 Paris (FR)**

(72) Inventeur: **Loiseau, Pascale**
**75009 Paris (FR)**

(74) Mandataire: **de Saint-Palais, Arnaud Marie**
**Cabinet Moutard,**
**35, rue de la Paroisse**
**78000 Versailles (FR)**

Remarques:
•Cette demande a été déposée le 29-09-2008 comme demande divisionnaire de la demande mentionnée sous le code INID 62.
•Revendications déposées après la date de dépôt de la demande (règle 68(4) CBE).

(54) **Procédé de compression d'un fichier numérique audio, image ou vidéo par désynchronisation**

(57) Le procédé selon l'invention s'applique à la réduction de taille des données brutes ou déjà compressées d'un fichier numérique provenant d'une source audio et/ou vidéo. Il comprend une séquence opératoire comportant une étape de désynchronisation des critères originaux de lecture du fichier, cette étape comprenant la compression et le compactage de données conservées et une étape de resynchronisation du fichier désynchronisé permettant sa visualisation et/ou son écoute selon ses critères de résolution et de durée d'origine.

EP 2 037 686 A2

**Description**

La présente invention concerne un procédé de réduction de la taille des données brutes ou déjà compressées d'un fichier numérique tel que, par exemple, un fichier audio (caractérisé par sa durée), vidéo (caractérisé par sa durée et sa résolution) et image (caractérisé par sa résolution).

Elle s'applique notamment, mais non exclusivement, à l'optimisation de la compression des données des encodeurs et décodeurs logiciels ou matériels existants ou à venir ainsi qu'à l'optimisation des supports de stockage de données numériques temporisées ou non.

Elle peut notamment s'adapter à tout matériel recevant déjà les données numériques compactées par les systèmes connus de compression ou à tout matériel s'apprêtant à diffuser des fichiers numériques audio ou vidéo, selon un codage connu ou à venir.

L'article de Crochiere R et al "Interpolation and decimation of digital signals - A tutorial review" paru dans le document Proceedings of the IEEE, IEEE NEW YORK, US vol. 69, n° 3, 1 mars 1981 (1981-03-01), pages 300-331, décrit un procédé d'interpolation et de décimation de signaux numériques s'adressant à des algorithmes faisant intervenir plusieurs taux d'échantillonnage. Ce document propose également un mode d'interpolation permettant de reconstituer les signaux numériques à partir des échantillons.

L'invention objet de la demande se base sur une toute autre approche et prend en considération le fait que la restitution des médias temporisés impose des actions élémentaires de présentation régulées par des quanta de temps. Ces médias temporisés dépendent de leur durée, exprimée pour l'audio par un nombre fixe d'échantillons par seconde et pour la vidéo par un nombre d'images par seconde.

La «durée d'affichage» de chaque échantillon, établi sur une seconde, détermine la durée du fichier audio et sa qualité. La combinaison du nombre total d'images ("length") et du nombre d'images, par seconde ("frame rate") génère la durée d'affichage de chaque image de la vidéo et par conséquent la durée totale de la vidéo et par delà le volume total d'informations à compacter.

C'est pourquoi le codage d'un fichier numérique dit temporisé obéit aussi à la règle de la durée, dans la mesure où le taux de bit "bit rate" caractérisant la qualité de l'encodage est exprimé en byte par seconde ou en kilo bit par seconde. Ainsi, un fichier audio d'une durée de 60 secondes, encodé à 128 Kbps, pèsera toujours 960 Ko quelles que soient la qualité de la source et la richesse de ses informations. Même les méthodes de compression utilisant des algorithmes reposant sur la variation du taux de bit "bit rate" ("variable bit rate") sont exprimées en byte par seconde.

L'invention a plus particulièrement pour but de résoudre les problèmes posés par une optimisation accrue du taux de compression des fichiers numériques, déjà compressés ou non, sans dégradation supplémentaire perceptible de qualité.

A cet effet, elle propose un procédé de traitement des données brutes ou déjà compressées d'un fichier numérique comportant une phase de compression et une phase de décompression desdites données, lesdites données provenant d'une source audio et/ou vidéo et se présentant sous la forme d'une succession temporelle d'échantillons pouvant consister en des échantillons sonores ou des images, ces échantillons se succédant à une fréquence déterminée de manière à ce que chaque échantillon soit inclus dans une période fixe de durée plus importante, l'écart de temps entre la période fixe et la durée de l'échantillon constituant un quanta de temps ou un pitch sonore.

Selon l'invention ce procédé est caractérisé en ce que la phase de compression comprend une désynchronisation des critères originaux du fichier par réduction voire suppression dudit écart de temps sans modifier ledit échantillon, et en ce que la phase de décompression comprend la synchronisation du fichier désynchronisé en réattribuant à chaque échantillon son écart de temps d'origine.

Dans le cas où le procédé selon l'invention concerne un fichier numérique temporisé, il pourra comprendre plus précisément les étapes suivantes :

- la dérégulation des susdits écarts de temps du fichier selon un coefficient de dérégulation prédéterminé de manière à raccourcir la durée du fichier et le nombre d'informations à traiter,
- l'enregistrement du fichier dérégulé (accéléré),
- la restitution du fichier conformément à un processus comprenant :

  • la détection du coefficient de dérégulation,
  • la restitution des écarts de temps d'origine en multipliant la durée du fichier traité par l'inverse du coefficient de régulation,
  • l'établissement des valeurs numériques restituées sur une échelle appropriée avec un pas correspondant au coefficient de dérégulation de manière à obtenir un fichier traité présentant des codes (colorimétrique ou auditif) conformes à ceux de la source. Ainsi, dans le cas d'un fichier vidéo, la susdite dérégulation est obtenue :

- soit en modifiant la valeur du quanta qui sépare chaque image dans l'entête du fichier non compressé,
- soit en copiant dans le même espace temporel chaque image vidéo selon le coefficient de dérégulation,
- soit en concentrant une série d'images.

Par contre, dans le cas d'un fichier audio, la dérégulation s'effectue en modifiant le pas ("pitch") et/ou en concentrant les échantillons et/ou en supprimant des échantillons selon un taux de suppression fixe ou variable.

Dans tous les cas, le procédé permet d'obtenir une restitution du fichier allégé dans ses quanta de temps originels, de manière à permettre une exécution correcte, sans dégradation complémentaire perceptible de qualité.

En réduisant la longueur de la chaîne de caractères, il favorise un accroissement du taux de redondances temporelles et spatiales.

En effectuant une désynchronisation des critères fondamentaux de lecture d'un fichier image non compressé il établit, par couche de couleurs et par bloc de 64 valeurs, un principe de suppression variable des valeurs en fonction de la linéarité des informations par ligne ou par colonne et/ou en fonction de leur proximité.

La désynchronisation des critères originaux de résolution selon ce processus permet alors de réduire, selon les caractéristiques des valeurs des blocs, la taille d'un bloc jusqu'à 32 fois sa résolution d'origine.

Par ailleurs, la désynchronisation des critères originaux de lecture par suppression ou par concentration adaptative des données permet de réduire la durée des médias temporisés audio et vidéo, entraînant une réduction importante du nombre d'informations à coder et nécessitant de ce fait une moindre consommation de bits. Ainsi, la taille d'un fichier "MPEG 1 layer 3", dont les critères originaux de lecture ont été dérégulés par 3, est trois fois moins importante pour une qualité équivalente qu'un fichier non traité par le procédé selon l'invention.

La désynchronisation par concentration d'un nombre déterminé «N de données» par moyenne simple ou par moyenne pondérée permet à la fois de réduire la chaîne totale de caractères à coder et pour la vidéo de réduire le nombre de combinaisons de couleurs, créant par conséquence un taux supplémentaire de données redondantes temporelles ou spatiales.

Le procédé selon l'invention permet donc aux algorithmes connus de livrer des ratios de compression plus élevés, car il offre un fichier dont les données numériques sont susceptibles d'une meilleure optimisation.

Comme précédemment mentionné, le procédé selon l'invention s'adapte à tout fichier numérique temporisé audio et/ou vidéo dont les données sont déjà compressées ou brutes. Dans ce cas, il agit :

- Soit en tant que mécanisme de réduction de la taille des données numériques audio et vidéo optimisant les facteurs de compression des systèmes d'encodage connus. Le procédé modifie alors la source non compressée sur laquelle le système va agir. Le procédé se comporte alors comme un module de prétraitement d'une source destinée à être encodée par des systèmes de compression dont le procédé permet à certaines fonctions d'être plus optimales.

- Soit en qualité de complément de réduction de taille de fichier numérique audio déjà encodé. Alors, il modifie le fichier compressé. Il se comporte comme un module de post compression et se définit comme un outil de surcompression destiné à réduire la taille d'un fichier numérique déjà compressé. Bien entendu, le procédé selon l'invention peut s'adapter à tout fichier numérique non temporisé dont les données ne sont pas compressées et qui est destiné à être réduit par un format propriétaire.

Il prévoit un lecteur audiovisuel adapté, permettant la restitution du fichier image, audio et vidéo selon ses critères d'origine de résolution et de durée.

Vis-à-vis des méthodes traditionnelles de réduction de taille des fichiers, le procédé selon l'invention présente plus précisément les avantages suivants :

On rappelle tout d'abord que tout fichier image est défini par une résolution fixe représentée par sa hauteur et par sa largeur et dont le rapport exprime par couche de couleurs le nombre de données numériques totales à traiter. La réduction du volume d'informations à traiter par la réduction de la résolution de l'image est généralement fixe et proportionnelle à la résolution d'origine. D'autre part, les systèmes connus de réduction variable des données ne traitent que les valeurs redondantes successives.

Le procédé selon l'invention propose, au contraire, de réduire, par couche de couleurs, le volume total d'informations condensables par une réduction variable des données de l'image et ce, sans respect de l'homothétie de l'image. En second lieu, il s'attache en priorité à réduire les suites de données différentes puis, éventuellement, à compacter les suites de données redondantes. Il s'applique aussi bien aux images fixes qu'aux images animées.

Un mode de mise en oeuvre du procédé selon l'invention sera décrit ci-après, à titre d'exemple non limitatif, avec référence aux dessins annexés dans lesquels :

La figure 1 est une représentation schématique montrant les étapes de la désynchronisation du fichier audio, image ou vidéo ;

La figure 2 est une représentation schématique montrant les étapes de la resynchronisation du fichier audio, image ou vidéo ;

La figure 3 illustre un mode de désynchronisation et de resynchronisation d'un bloc de données image.

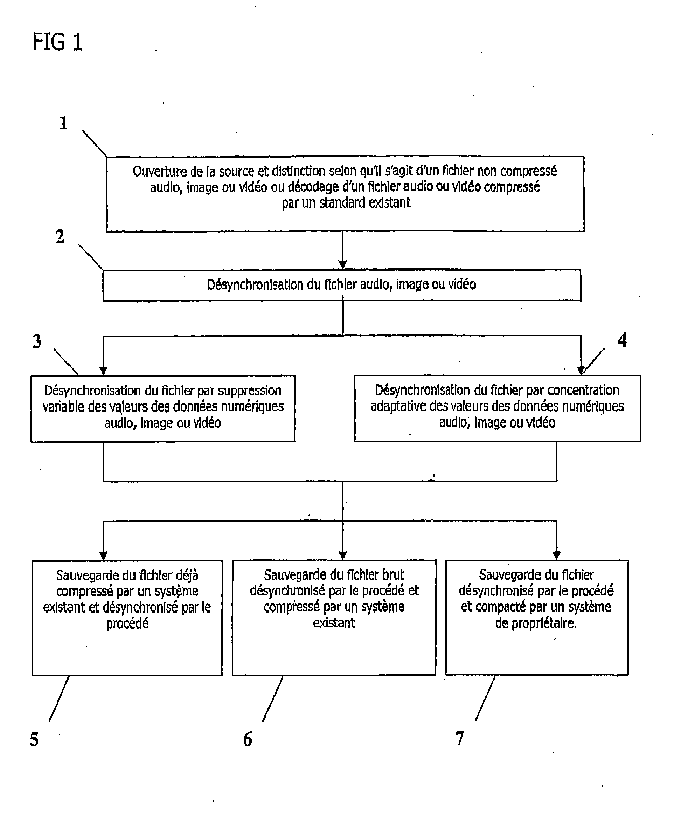

Tel qu'illustré figure 1, le processus de désynchronisation d'un fichier audio, image ou vidéo comprend les étapes suivantes :

Une première étape d'ouverture du fichier: on distingue si le fichier est un fichier audio, image et/ou vidéo non compressé ou s'il s'agit d'un fichier audio et vidéo compressé déjà par un système existant, par exemple de type Mpeg audio ou Mpeg vidéo (bloc 1).

Une seconde étape qui représente les deux méthodes de réduction de la taille du fichier audio et/ou vidéo par désynchronisation de leurs critères originels de lecture (bloc 2).

En fonction de la vitesse de traitement souhaitée, des ressources du support permettant le traitement, du niveau de qualité de restitution exigée et de la complexité des composantes de couleurs de toute ou en partie du fichier vidéo et/ou des niveaux de variations entre les différents canaux caractérisant le fichier audio, deux méthodes de désynchronisation des critères originels de lecture sont utilisées: la désynchronisation par suppression variable des valeurs des données numériques audio et vidéo (bloc 3) et la désynchronisation par concentration adaptative des valeurs des données audio et/ou vidéo (bloc 4).

On peut appliquer chacune de ces deux méthodes à l'ensemble des valeurs des données numériques du fichier audio et/ou vidéo considéré ou appliquer conjointement ces deux méthodes à tout ou partie du fichier audio et/ou vidéo dont on veut réduire la résolution et par conséquent la taille.

**1) La méthode de désynchronisation par suppression variable des valeurs des données numériques audio, image et/ou vidéo (bloc 3).**

La désynchronisation des critères originels de lecture des données audio et/ou vidéo par suppression des valeurs des données numériques (bloc 3) consiste à supprimer un nombre «N de données» selon un coefficient variable servant à la réduction de la durée originelle du fichier et à la restitution dudit nombre «N de données» lors de l'écoute du fichier audio ou de la visualisation du fichier image et/ou vidéo.

On entend par nombre «N de données» le nombre d'échantillons audio supprimés, le nombre d'images supprimées ou le nombre de groupes d'images supprimés dans une vidéo ou encore le nombre de valeurs numériques différentes supprimées dans une image ou dans une suite d'images.

Lors de la phase de restitution, on entend par nombre «N-1 de données» le nombre d'échantillons audio à restituer, le nombre d'images à restituer ou le nombre de groupes d'images à restituer dans une vidéo ou encore le nombre de valeurs numériques différentes à restituer dans une image, afin de rétablir le fichier audio, image et/ou vidéo dans ses critères originels de restitution.

Le coefficient de suppression $C_S$ des «N données» figure dans l'entête du fichier ou en entête du groupe d'échantillons, du groupe d'images et/ou du groupe de valeurs numériques dont il indique le nombre de données à adjoindre à la restitution. Ce coefficient sert au paramétrage de la formule d'adjonction des informations manquantes, indispensable au rétablissement du fichier dans ses critères originels de lecture. La restitution d'un groupe de données s'effectue selon le processus suivant :

Soit un groupe de données à restituer $V_1, V_2, V_3... V_n$.

On détermine un coefficient IR de restitution des informations manquantes selon la formule

$$IR = \frac{V_n - V_1}{C_S + 1}$$

A partir de la valeur IR précédemment calculée, on reconstitue ensuite les données manquantes $V_2$ à $V_n - 1$ selon la formule itérative suivante

$$V_2 = V_1 - IR$$
$$v_3 = V_2 - IR$$
$$---------------$$
$$V_n - 2 = V_n - 3 - IR$$
$$V_n - 1 = V_n + IR$$

La désynchronisation des critères originels de lecture s'applique à tout fichier audio et/ou vidéo compressé par des standards de compression existants, à toute ou en partie de fichier audio, image et/ou vidéo non compressé destiné à être réduit par un format de compression propriétaire et caractérisé par de faibles amplitudes, à tout ou partie de fichier image dont les valeurs ou les groupes de valeurs se caractérisent par des valeurs proches et linéaires, et à tout ou partie de fichiers vidéo dont les changements de plans sont peu fréquents.

**2) La méthode de désynchronisation des critères de lecture par concentration adaptative des valeurs des données numériques (bloc 4).**

La désynchronisation des critères originels de lecture par concentration adaptative des données audio et/ou vidéo (bloc 4) consiste à concentrer selon un coefficient fixe un nombre «N d'échantillons» audio, un nombre «N d'images» ou un nombre «N de groupe d'images» d'une vidéo et enfin à concentrer selon un coefficient fixe ou variable un nombre «N de valeurs numériques» d'une image.

Le coefficient fixe figure dans l'entête du fichier, alors que le coefficient variable figure dans l'entête du groupe de valeurs concentrées dont il indique le nombre de données à recomposer lors de la phase de restitution.

La désynchronisation par concentration adaptative des valeurs des données numériques de tout ou partie d'un fichier audio, image et/ou vidéo est réalisée à l'aide de deux types de concentration de données : une concentration par moyenne simple et une concentration par moyenne pondérée adaptative.

La concentration du nombre «N de données» par moyenne simple s'applique à tout ou partie des valeurs des données numériques de tout ou partie d'un fichier audio, image et/ou vidéo, caractérisé par des amplitudes moyennes ou par des scènes de faibles mouvements. Seule la valeur concentrée représentant «N données» étant conservée, le nombre des échantillons du fichier audio, le nombre d'images ou le nombre du groupe d'images du fichier vidéo et/ou le nombre de valeurs ou le nombre de groupes de valeurs du fichier image a été réduit par le ou par les coefficients de concentration des données.

La formule de la moyenne simple M$_S$ est la suivante :

$$M_S = \frac{\sum_{n=1}^{N} x(n)}{N}$$

formule dans laquelle x(n) représente la première valeur traitée

La concentration des «N données» par moyenne pondérée adaptative sert à tout ou partie au fichier audio comportant de grandes amplitudes et à tout ou partie de fichiers vidéo caractérisés par de nombreux changements de plans et/ou de scènes de mouvements.

On entend par moyenne pondérée adaptative, la concentration de «N données» pondérées en référence à une valeur précise dont la position peut varier dans le groupe de valeurs concentrées.

La formule dé concentration par moyenne M$_P$ pondérée est la suivante :

$$M_P = \frac{\sum_{n=1}^{N} a(n)*x(n)}{\sum_{n=1}^{N} a(n)}$$

formule dans laquelle a(n) représente le coefficient de la valeur traitée x(n)

Les blocs 5, 6 et 7 décrivent les trois possibilités de sauvegarde de tout fichier audio, image et/ou vidéo désynchronisé, selon qu'il s'agit d'un fichier déjà compressé par un système existant (bloc 5), d'un fichier non compressé désynchronisé par le procédé et compressé par un système existant (bloc 6) et d'un fichier non compressé, désynchronisé par le procédé et compressé par un système propriétaire (bloc 7).

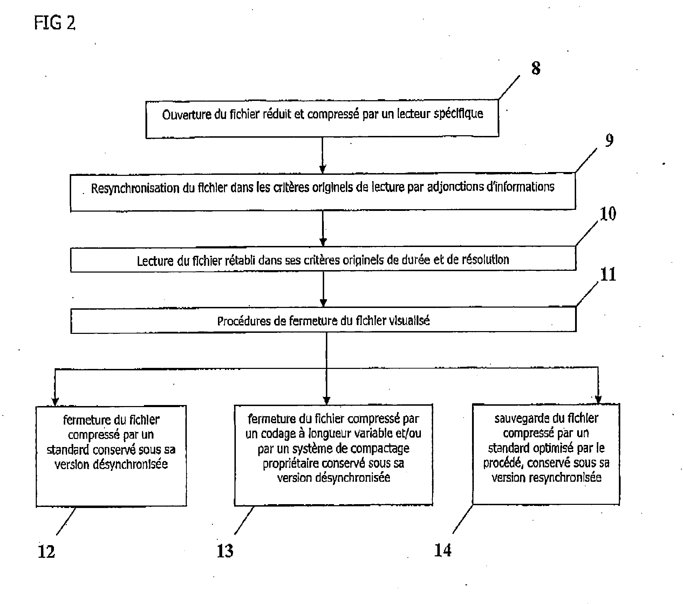

La figure 2 montre les quatre étapes de la resynchronisation d'un fichier audio, image et/ou vidéo désynchronisé par le procédé.

Le bloc 8 représente la phase de l'ouverture du fichier par un lecteur audio, image et/ou vidéo spécifique distinguant s'il s'agit d'un fichier numérique désynchronisé compressé par un système existant ou par un format propriétaire.

Le bloc 9 illustre la phase de resynchronisation par adjonction des échantillons, par adjonction de valeurs, par adjonction d'images et/ou de groupes d'images manquantes afin dé restituer le fichier audio, image et/ou vidéo dans ses critères originels de lecture.

La formule appliquée à la phase d'adjonction est réalisée par un lecteur permettant un décodage et une lecture en temps réel du fichier désynchronisé.

La formule d'adjonction des informations nécessaires à la resynchronisation dépend du coefficient du nombre «N de données» supprimées lors de la phase de désynchronisation des critères de lecture, mais s'applique indistinctement selon qu'il s'agisse de la suppression variable des données audio et/ou vidéo et/ou de la désynchronisation par concentration adaptative des données audio et/ou vidéo.

Le bloc 10 représente la phase de lecture du fichier audio, image et/ou vidéo rétablit dans ses critères originels de lecture par le lecteur.

Les blocs 11, 12 et 13 caractérisent la phase de fermeture du fichier écouté et/ou visualisé (bloc 11), selon que l'on souhaite conserver le fichier compressé par un standard selon sa durée réduite (bloc 12), conserver le fichier compressé par un format propriétaire selon sa durée réduite (bloc 13) ou sauvegarder le fichier compressé par un standard selon sa résolution originelle (bloc 14).

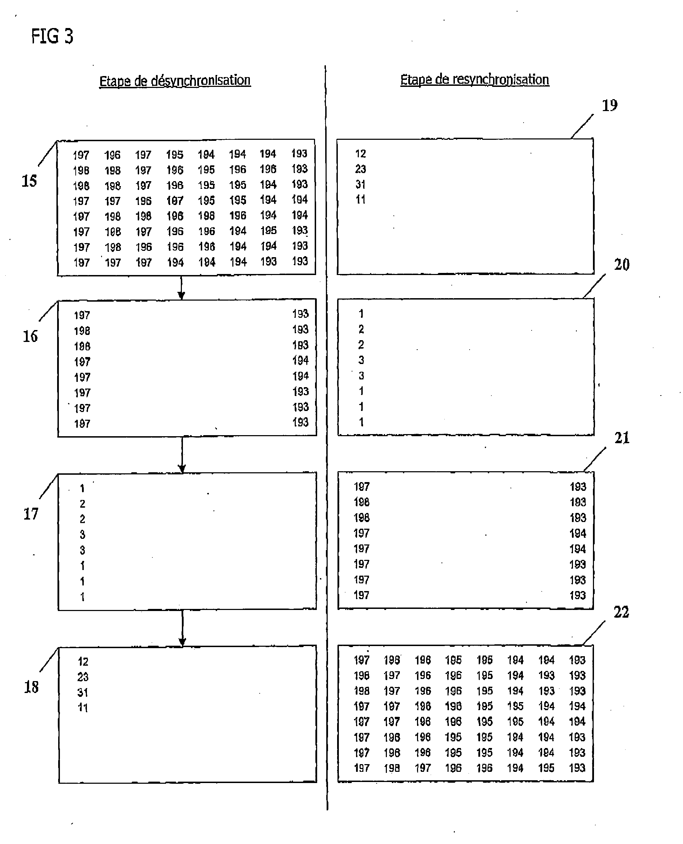

La figure 3 montre un exemple de désynchronisation et de resynchronisation d'un bloc de données image 15 comprenant 64 valeurs comportant 8 colonnes de 8 valeurs comprises entre 193 et 198.

La première étape de désynchronisation consiste à vérifier que la différence entre le minimum et le maximum des valeurs est inférieure ou égale à 21. Si tel est le cas, il est possible de procéder à la désynchronisation.

Si tel est le cas, on considère la première valeur et la dernière valeur de chaque ligne que l'on stocke dans une table annexe (bloc 16) et on attribue à chaque combinaison distincte un numéro spécifique (bloc 17). La dernière opération consiste à regrouper et à mémoriser les numéros de combinaison deux à deux (bloc 18) afin de pouvoir stocker chaque regroupement de numéro de combinaison sur un seul octet (exemple, la combinaison des numéros 1 et 2 devient 12).

La première étape de la phase inverse (resynchronisation) (bloc 19) consiste à lire les numéros de combinaison regroupés précédemment mémorisés.

On dissocie ces numéros de combinaison (bloc 20) de manière à obtenir les numéros de combinaison correspondant à la première donnée et à la dernière donnée de chaque ligne (bloc 21),

Connaissant le premier et le dernier numéro de chaque ligne ainsi que le nombre de numéros par ligne, on établit la différence entre chacun de ces couples de numéros et on divise le résultat de cette différence par le nombre de numéros compris entre ce couple de numéros pour obtenir l'intervalle (le pas) entre deux numéros consécutifs. On retranche au premier numéro l'intervalle précédemment calculé et on attribue au deuxième numéro la valeur entière de cette différence, on procède de même pour établir la valeur du troisième numéro et ainsi de suite jusqu'au dernier numéro. On obtient ainsi un bloc de données resynchronisées dont les valeurs sont très proches, voire même semblables, aux valeurs d'origine (bloc 22).

On constate que selon ce processus, les frontières (premier et dernier numéro de chaque ligne) sont identiques à celles d'origine et n'entraînent donc pas de dégradation entre les blocs de données.

Un avantage de cette solution réside dans le compactage deux à deux ou trois par trois des numéros de combinaison stockés sur un octet et ce, jusqu'à l'utilisation des 256 valeurs permettant un codage sur huit bits.

Un autre avantage de cette solution consiste en ce qu'elle permet d'obtenir des vitesses de traitement élevées et ainsi d'économiser des ressources processeur.

## Revendications

**1.** Procédé de traitement de N données d'un fichier numérique audio, image et/ou vidéo lisible selon des critères originels de lecture, ce procédé comportant une phase de compression et une phase de restitution desdites données,
**caractérisé en ce que :**

    I - la phase de compression comprend :

        a) une étape de concentration du fichier,

           . selon un coefficient de concentration fixe,

                - d'un nombre d'échantillons dans le cas d'un fichier audio, ou
                - d'un nombre d'images ou d'un nombre de groupe d'images dans le cas d'un fichier vidéo, . selon un coefficient de concentration fixe ou variable,
                - d'un nombre de valeurs numériques d'une image dans le cas d'un fichier image,

        b) une phase de génération d'un fichier compressé dans lequel le nombre des échantillons du fichier audio, le nombre d'images ou le nombre de groupe d'images du fichier vidéo et/ou le nombre de valeurs ou le nombre de groupe de valeurs du fichier image a été réduit par le ou les coefficients de concentration des données, seule la valeur concentrée représentant les N données étant conservée, cette phase de compression ayant pour effet de désynchroniser les critères originels de lecture du fichier et de réduire la durée de lecture,
        c) une étape d'insertion du coefficient de concentration fixe dans l'entête du fichier compressé et/ou du coefficient variable dans l'entête du groupe de valeurs numériques de l'image, de manière à indiquer le nombre de données à adjoindre lors de la phase de restitution, ce coefficient servant au paramétrage d'une formule d'adjonction des informations manquantes servant au rétablissement du fichier dans les critères originels de lecture,
        d) la sauvegarde du fichier compressé désynchronisé,

    II - la phase de restitution du fichier comprend :

        - une phase d'ouverture du fichier compressé par un lecteur audio, image et/ou vidéo spécifique, un lecteur assurant un décodage et une lecture du fichier,
        - une phase de resynchronisation par adjonction des échantillons, des valeurs, des images et/ou des groupes d'images manquantes, afin de restituer le fichier audio, image et/ou vidéo, selon les critères originels de lecture.

**2.** Procédé selon la revendication 1 pour le traitement d'un bloc de données image comportant des lignes et des colonnes,
**caractérisé en ce que** la phase de compression comprend :

        - le stockage dans une table annexe de combinaisons formées de la première valeur et la dernière valeur de chaque ligne,
        - l'attribution d'un numéro de combinaison spécifique à chaque combinaison distincte,

- le regroupage et la mémorisation des numéros de combinaison deux à deux,
- le stockage en mémoire de chaque regroupement de numéro de combinaison sur un seul octet, et **en ce que** la phase de restitution comprend :
- la lecture des groupements de numéros de combinaison précédemment stockés en mémoire,
- la dissociation de ces groupements des combinaisons de manière à obtenir les numéros de combinaison correspondant à la première donnée et à la dernière donnée de chaque ligne, puis pour chaque ligne :
- l'établissement de la différence entre les numéros de combinaison de chaque couple formé par le premier et le dernier numéro de chaque ligne,
- pour chaque ligne, la division de cette différence par le nombre de valeurs compris entre ce couple de numéros pour obtenir l'intervalle entre deux numéros consécutifs,
- la soustraction à la première valeur du couple, l'intervalle précédemment calculé et l'attribution à la deuxième valeur de la valeur entière de cette différence,
- l'établissement des valeurs suivantes selon un même processus.

3. Procédé selon l'une des revendications 1 et 2, **caractérisé en ce que**, lors de la phase de décompression, les données manquantes $V_2$ à $V_{n-1}$ sont reconstituées selon la formule itérative suivante :

$$V_2 = V_1 - IR$$
$$V_3 = V_2 - IR$$
$$----------------$$
$$V_{n-2} = V_{n-3} - IR$$
$$V_{n-1} = V_n + IR$$

formule dans laquelle :

IR est un coefficient de restitution des informations manquantes calculé selon la formule suivante :

$$IR = \frac{V_1 - V_n}{C_S + 1}$$

Cs étant le coefficient de concentration figurant dans l'entête du fichier compressé.

4. Procédé selon la revendication 1 pour le traitement d'un fichier image non compressé, **caractérisé en ce que** l'étape de concentration du fichier comprend pour chaque couche de couleurs et par bloc de 64 valeurs, la suppression variable desdites valeurs numériques en fonction de la linéarité des informations par ligne ou par colonne et/ou en fonction de leur proximité.

5. Procédé selon la revendication 2, **caractérisé en ce que** les susdits blocs de données image comportent 8 colonnes de 8 valeurs soit 64 valeurs.

6. Procédé selon la revendication 5, **caractérisé en ce qu'**il comprend une étape préalable de vérification que la différence entre le minimum et le maximum des valeurs est inférieure ou égale à 21, la désynchronisation n'étant effectuée que si cette relation est satisfaite.

7. Procédé selon la revendication 1, **caractérisé en ce que** la phase de compression comprend la concentration adaptative des valeurs des données numériques de tout ou partie du fichier, cette concentration étant de type par moyenne simple ou par moyenne pondérée.

8. Procédé selon la revendication 7, **caractérisé en ce que** la moyenne simple $M_S$ est obtenue par la formule suivante :

$$M_S = \frac{\sum\limits_{n=1}^{N} x(n)}{N}$$

formule dans laquelle x(n) représente la valeur traitée.

9. Procédé selon la revendication 7, **caractérisé en ce que** la moyenne pondérée $M_P$ est obtenue par la formule suivante :

$$M_p = \frac{\sum\limits_{n=1}^{N} a(n) * x(n)}{\sum\limits_{n=1}^{N} a(n)}$$

formule dans laquelle a(n) représente le coefficient de la valeur traitée x(n).

**10.** Procédé selon l'une des revendications précédentes,
**caractérisé en ce qu'**il est utilisé en tant que module de prétraitement d'une source destinée à être encodée par des systèmes de compression.

**11.** Procédé selon l'une des revendications 1 à 10, **caractérisé en ce qu'**il est utilisé en tant que module de post compression de manière à réduire la taille d'un fichier déjà compressé.

EP 2 037 686 A2

## FIG 1

**1** Ouverture de la source et distinction selon qu'il s'agit d'un fichier non compressé audio, image ou vidéo ou décodage d'un fichier audio ou vidéo compressé par un standard existant

**2** Désynchronisation du fichier audio, image ou vidéo

**3** Désynchronisation du fichier par suppression variable des valeurs des données numériques audio, image ou vidéo

**4** Désynchronisation du fichier par concentration adaptative des valeurs des données numériques audio, image ou vidéo

**5** Sauvegarde du fichier déjà compressé par un système existant et désynchronisé par le procédé

**6** Sauvegarde du fichier brut désynchronisé par le procédé et compressé par un système existant

**7** Sauvegarde du fichier désynchronisé par le procédé et compacté par un système de propriétaire.

FIG 2

Ouverture du fichier réduit et compressé par un lecteur spécifique    **8**

Resynchronisation du fichier dans les critères originels de lecture par adjonctions d'informations    **9**

Lecture du fichier rétabli dans ses critères originels de durée et de résolution    **10**

Procédures de fermeture du fichier visualisé    **11**

| fermeture du fichier compressé par un standard conservé sous sa version désynchronisée | fermeture du fichier compressé par un codage à longueur variable et/ou par un système de compactage propriétaire conservé sous sa version désynchronisée | sauvegarde du fichier compressé par un standard optimisé par le procédé, conservé sous sa version resynchronisée |

**12**        **13**        **14**

FIG 3

Etape de désynchronisation | Etape de resynchronisation

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **CROCHIERE R et al.** Interpolation and decimation of digital signals - A tutorial review. *Proceedings of the IEEE,* 01 Mars 1981, vol. 69 (3), 300-331